# EUROPEAN PATENT SPECIFICATION

(11) **EP 2 036 948 B1**
(45) Date of publication and mention of the grant of the patent: **15.04.2015**
(21) Application number: 07767389.5
(22) Date of filing: 22.06.2007
(51) Int. Cl.: C08L 33/12

(54) **METHACRYLIC RESIN COMPOSITION AND MOLDED ARTICLE THEREOF**
METHACRYLHARZZUSAMMENSETZUNG UND FORMARTIKEL DARAUS
COMPOSITION DE RÉSINE MÉTHACRYLIQUE ET ARTICLE MOULÉ CORRESPONDANT

(30) Priority: 27.06.2006 JP 2006177334; 27.06.2006 JP 2006177333
(43) Date of publication of application: 18.03.2009
(73) Proprietor: Panasonic Corporation, Osaka 571-8501 (JP)
(72) Inventor: NIU, Takaya c/o Panasonic Corporation, 2-1-61 Shiromi, Chuo-ku, Osaka 540-6207 (JP); ROKUSHIMA, Kazumasa, 2-1-61 Shiromi, Chuo-ku, Osaka 540-6207 (JP); ISHIKI, Shigeru, 2-1-61 Shiromi, Chuo-ku, Osaka 540 6207 (JP); YAMAGUCHI, Shigeyuki, 2-1-61 Shiromi, Chuo-ku, Osaka 540-6207 (JP); KITAMURA, Hitoshi, 2-1-61 Shiromi, Chuo-ku, Osaka 540-6207 (JP); MAEDA, Yasunari, 2-1-61 Shiromi, Chuo-ku, Osak 540-6207 (JP)
(74) Representative: Appelt, Christian W.
(86) International application number: PCT/JP2007/062577
(87) International publication number: WO 2008/001684

(56) References cited:
- EP-A- 0 259 290
- EP-A- 1 398 352
- GB-A- 2 199 583
- JP-A- 03 183 524
- JP-A- 50 119 040
- JP-A- 59 223 755
- JP-A- 2000 169 658
- JP-A- 2000 290 461
- JP-A- 2003 501 507
- JP-A- 2003 525 994
- US-A- 3 459 834

## Description

### TECHNICAL FIELD

The present invention relates to a methacrylic resin composition having improved impact resistance, and to a molded article of the resin.

### BACKGROUND

Methacrylic resins (polymethylmethacrylate: PMMA) are hardest among thermoplastic resins, and have excellent chemical resistance to such as acids and alkalis. Therefore, methacrylic resins are widely used in all manner of molded articles. However, the impact resistance of PMMA is comparatively low. When PMMA breaks, the resulting broken surface can be sharply jagged, and thus PMMA must be used with caution.

Such being the case, Japanese Patent Application Laid-open No. H09-059472 discloses the feature of increasing the impact resistance of PMMA by blending into PMMA a rubber such as an acrylic rubber.

However, blending a rubber into PMMA is problematic in that this results in lower hardness and strength, greater dimensional changes, depending on the temperature, and lower chemical resistance, as compared with using PMMA singly. Furthermore from EP 1 398 352 A1, EP 0 259 290 A2, US 3,459,834 and GB 2 199 583 A various resin compositions are known.

### DISCLOSURE OF THE INVENTION

In the light of the above it is an object of the present invention to provide a methacrylic resin composition that allows improving impact resistance without loss of strength, hardness, dimensional stability or chemical resistance

This object is solved by a methacrylic resin composition according to claim 1. Claims 2 and 3 refer to specifically advantageous realizations of the methacrylic resin composition according to claim 1; claim 4 relates to a molded article made of such a methacrylic resin composition.

This object is further solved by a method of producing a methacrylic resin composition according to claim 5. Claims 6 and 7 refer to specifically advantageous realizations of the method according to claim 5.

The methacrylic resin composition according to the present invention includes a methacrylic resin and a fine powder filler of a fluororesin blended in said methacrylic resin. The fluororesin is a tetraethylene tetrafluoride resin (PTFE).

Thereby, the impact resistance of a molded article made of the methacrylic resin composition can be improved without loss of strength, hardness, dimensional stability or chemical resistance.

Preferably, the average particle size of the fine powder filler ranges preferably from 5 µm to 25 µm. Moldability is enhanced thereby while impact resistance of the molded article can also be improved, without detriment of the appearance of the molded article.

Preferably, the compounding ratio of the fine powder filler ranges from 0.5wt% to 5wt%. Thereby, the molded article can be improved the impact resistance without impairing the flexural strength thereof.

The fine powder filler is baking-treated one. Thereby, the molded article can improve the impact resistance without loss of strength, hardness or dimensional stability, and reduce squeak noise when the molded article is fastened with a screw that runs through the molded article.

The fine powder filler has a reduction ratio of at least 5% by weight when heated at 420QC for 30 minutes. Thereby, the chemical crack resistance of the molded article can be increased.

### BRIEF DESCRIPTION OF THE DRAWINGS

Fig. 1 is a diagram for explaining a method for testing chemical resistance in a molded article of a methacrylic resin composition according to the present invention.

### BEST MODE FOR CARRYING OUT THE INVENTION

A best mode for carrying out the invention is explained below.

The present invention is a methacrylic resin composition obtained by blending a methacrylic resin (polymethylmethacrylate: PMMA) with a fine powder filler of a fluororesin having higher heat resistance and chemical resistance than PMMA but lower hardness than PMMA. Examples of the fluororesin include, for instance, an tetrafluoroethylene resin (PTFE), a tetrafluoroethylene-perfluoroalkoxyethylene copolymer resin (PFA), a tetrafluoroethylenehexafluoropropylene copolymer resin (FEP), an ethylenetetrafluoroethylene copolymer resin (ETFE), a vinylidene fluoride resin (PVF), a chlorotrifluoroethylene resin (PCTFE), an ethylene-chlorotrifluoroethylene resin (ECTFE) and the like.

Blending a fine powder filler of a pliable fluororesin having lower hardness than PMMA allows relieving stresses while dispersing crack occurrence sites, and improves the impact resistance of a molded article made of the methacrylic resin composition. When fabricating a mold product with a fine powder filler having a lower melting temperature and a lower thermal decomposition temperature than PMMA, i.e. a fine powder filler having a lower heat resistance than PMMA, the resulting mold product may suffer from shape irregulation, or separation of the fine powder filler from PMMA or exfoliation after molding. Therefore, a fine powder filler of the present invention is made of such as the above-described fluororesin having higher heat resistance than PMMA.

The above fluororesin has high flexibility and has a lower hardness than PMMA. For instance, the flexural modulus of PMMA is 3 GPa, whereas the flexural modulus of PTFE is 0.55 GPa and the flexural modulus of PFA is 0.66 GPa. Furthermore, the fluororesin has higher chemical resistance and higher heat resistance than PMMA. For instance, the melting temperature of PMMA is about 200ºC, whereas PTFE has a heat-resistance temperature of 250ºC or above and a melting temperature of 300ºC or above.

Preferably the fine powder filler of a fluororesin has an average particle size of 5 to 25 µm. When an average particle size is smaller than 5 µm, it results in impaired handleability and makes uniform mixing more difficult. By contrast, when an average particle size is larger than 25 µm, it results in coarser particles, which may become visible on the surface of the molded article, thereby marring the appearance of the latter.

The methacrylic resin of the present invention can be obtained by blending a fine powder filler of the above-described fluororesin into PMMA. The compounding ratio of the fine powder filler is preferably 0.5 to 5wt% (0.5 to 5 parts by weight relative to 100 parts by weight of PMMA). (29)When the compounding ratio of fine powder filler is smaller than 0.5wt%, the effect of improving impact resistance, elicited by blending the fine powder filler in, may fail to be sufficiently brought about. The impact resistance enhancement effect is greatest when the compounding ratio of fine powder filler is of about 1wt%. The flexural strength drops considerably when the compounding ratio of fine powder filler exceeds 5wt%. Therefore, the compounding ratio of fine powder filler is preferably no greater than 5wt%.

A baking-treated fine powder filler is available. The baked fine powder filler of a fluororesin that is used may be procured as a commercially available additive for lubrication. The dispersibility of the fine powder filler into PMMA can be improved, and the impact resistance performance can be further enhanced, when using the fluororesin fine powder having an increased thermal history achieved through a baking treatment.

As the baked fine powder filler there is preferably used a fine powder filler exhibiting a reduction ratio no less than 5% by weight when heated at 420ºC for 30 minutes. Powders having a small heating loss tend to have a large molecular weight and to be comparatively hard. Such powders may lower the effect of reducing residual stress in the PMMA molded article, while rendering insufficient the effect of enhancing the chemical crack resistance, both such effects being elicited through blending in of the fine powder filler of a fluororesin. Therefore, the chemical crack resistance of the molded article is increased by blending PMMA with a fine powder filler of a fluororesin having a reduction ratio at least 5% by weight when heated at 420ºC for 30 minutes, and having a not excessively high thermal history. Although not limited the upper limit of reduction ratio of the fine powder filler is preferably no greater than 10% by weight in actual practice when heated at 420ºC for 30 minutes.

A molded article can be obtained by molding the methacrylic resin composition of the present invention thus obtained, in accordance with any molding method such as injection molding. The temperature at which the fine powder filler is mixed and kneaded with the PMMA, as described above, and the temperature during molding, is higher than the melting temperature of PMMA and lower than the melting temperature of the fine powder filler.

In the molded article, thus, PMMA contains a fine powder filler having higher heat resistance and chemical resistance, and lower hardness, than PMMA. Therefore, the impact resistance of the molded article can be increased by way of a low-hardness highly pliable fine powder filler of a fluororesin. Although the fine powder filler has low hardness, the filler is contained in the molded article. As a result, the hardness and strength of the molded article do not drop significantly. Moreover, the fine powder filler has high heat resistance and chemical resistance, and hence dimensional stability and chemical resistance do not become impaired.

### EXAMPLES

The present invention is explained next in more detail on the basis of Example 1. References and Comparative examples are helpful for understanding the invention.

### (Example 1 )

PMMA, "Acrypet VH001" from Mitsubishi Rayon Co., Ltd. was used. A baking-treated fluororesin powder, "KTL-20N" by Kitamura Ltd., having an average particle size of 20 µm was used. This baked PTFE powder was heated to a temperature of 420°C, at a temperature rise rate of 10°C/minute, after which the temperature was held for 30 minutes. The resulting heating loss, measured using a TGA instrument, was 6% by weight.

### (References 1 to 7)

PMMA, "Acrypet VH001" from Mitsubishi Rayon Co., Ltd. was used. PTFE fine powder filler, "Sanpla PTFE powder WEB93131" from Sanplatec Co., Ltd., having an average particle size of 25 µm, "Sanpla PTFE powder WEB93132" by Sanplatec Co., Ltd., having an average particle size of 10 µm, and "Sanpla PTFE powder WEB93133" by Sanplatec Co., Ltd., having an average particle size of 6 µm was used respectively.

### (Reference 8)

PMMA, "Acrypet VH001" from Mitsubishi Rayon Co., Ltd. was used. A baking-treated fluororesin powder "KTL-450" from Kitamura Ltd., having an average particle size of 19 µm was used. This baked PTFE powder was heated to a temperature of 420°C, at a temperature rise rate of 10°C/minute, after which the temperature was held for 30 minutes. The resulting heating loss, measured using a TGA instrument (thermogravimetric analyzer), was 3% by weight.

In the various references and Example 1, the PTFE fine powder fillers were blended into PMMA in the compounding ratio given in Tables 1 and 2. The blends were heated and mixed in a biaxial kneader at a cylinder temperature of 300°C, to prepare molding pellets of the methacrylic resin composition.

The molding pellets thus prepared were molded in an injection molding machine at a cylinder temperature of 245°C, to prepare molded articles for testing.

### (Comparative example 1)

A molded article for testing was obtained by injection molding in the same way as above, using "Acrypet VH001" by Mitsubishi Rayon Co., Ltd as PMMA.

### (Comparative example 2)

A molded article for testing was obtained by injection molding in the same way as above, but using "Acrypet IR D30 001" (rubber-containing impact resistance-grade product) by Mitsubishi Rayon Co., Ltd as PMMA.

The molded articles for testing obtained in Example 1, References 1 to 8 and Comparative examples 1 to 2 were tested for pencil hardness (JIS K 5400), flexural strength (JIS K 7171), Charpy impact value (JIS K 7111) and coefficient of linear expansion (ASTM D696). The results are given in Tables 1 and 2.

**[Table 1]**

| | | Reference | | | | | | | Comp. example | |
|---|---|---|---|---|---|---|---|---|---|---|
| | | 1 | 2 | 3 | 4 | 5 | 6 | 7 | 1 | 2 |
| PMMA article number | | VH001 | | | | | | | | IR D30 001 |
| PTFE article number | | WEB93132 | | | | | WEB9 3133 | WEB9313 1 | - | - |
| PTFE | Average particle size (µm) | 10 | 10 | 10 | 10 | 10 | 6 | 25 | - | - |
| | Compound ing ratio (wt%) | 0.1 | 0.5 | 1 | 5 | 10 | 1 | 1 | - | - |
| Pencil hardness | | 4H | 4H | 4H | 4H | 4H | 4H | 4H | 4H | 3H |
| Flexural strength (MPa) | | 126 | 125 | 124 | 120 | 115 | 124 | 123 | 126 | 90 |
| Charpy impact value (kJ/m²) | | 22 | 24 | 25 | 23 | 22 | 24 | 25 | 20 | 25 |
| Coefficient of linear expansion (%) | | 6×10⁻⁵ | 6×10⁻⁵ | 6×10⁻⁵ | 6×10⁻⁵ | 6×10⁻⁵ | 6×10⁻⁵ | 6×10⁻⁵ | 6×10⁻⁵ | 8×10⁻⁵ |

**[Table 2]**

| | | | | Comp. example | |
|---|---|---|---|---|---|
| | | Ref. 8 | Example 1 | 1 | 2 |
| PMMA article number | | VH001 | | | IR D30 001 |
| PTFE article number | | KTL-450 | KTL-20N | - | - |
| PTFE | Average particle size (µm) | 19 | 20 | - | - |
| | Compounding ratio (wt%) | 1 | 1 | - | - |
| | Baking treatment | Yes | Yes | - | - |
| | Heating loss (%) | 3 | 6 | - | - |
| Pencil hardness | | 4H | 4H | 4H | 3H |
| Flexural strength (MPa) | | 119 | 121 | 126 | 90 |
| Charpy impact value (kJ/m²) | | 27 | 29 | 20 | 25 |
| Coefficient of linear expansion (%) | | 6×10⁻⁵ | 6×10⁻⁵ | 6×10⁻⁵ | 8×10⁻⁵ |
| Chemical crack resistance (critical strain value:%) | | 0.3 | 0.45 | 0.3 | 0.45 |
| Squeak noise during screw fastening | | No | No | Yes | Yes |

As Tables 1 and 2 show, molded articles in Example 1 and the references, in which PTFE fine powder fillers having an average particle size from 6 to 25 µm are blended to a compounding ratio of 0.5 to 5wt%, show higher Charpy impact value than Comparative example 1, of unblended PMMA, and similar Charpy impact value to that of Comparative example 2, where PMMA is an impact resistance-grade product containing rubber. The pencil hardness, the flexural strength and the coefficient of linear expansion in Example 1 and the references are similar to those of Comparative example 1, while hardness, strength and dimensional stability do not show a decrease. The molded articles of Example 1 and the references can retain the superior hardness, flexural strength and dimensional stability of methacrylic resins, while showing improved impact strength.

In Example 1 and the references, substantially the same effects were observed for average particle sizes of PTFE fine powder filler of 6 µm, 10 µm, 19 µm, 20 µm and 25 µm. However, handleability is poor when the average particle size is smaller than 5 µm, while the appearance of the molded article is problematic, on account of particle roughness, when the average particle size exceeds 25 µm. Accordingly, the average particle size of the fine powder filler ranges preferably from 5 µm to 25 µm.

As seen in References 1 to 5, the increase in Charpy impact value reaches a peak for a compounding ratio of PTFE fine powder filler of 1wt%. The effect of increasing Charpy impact value tends to be weaker for compounding ratio lower or higher than the above compounding ratio, while a decrease in flexural strength is observed for a compounding ratio of 5wt%. Accordingly, it is found that the compounding ratio of fine powder filler ranges preferably from 0.5 to 5wt%.

The molded articles of Example 1 and Reference 8, where the methacrylic resin composition comprises PMMA blended with a baked PTFE powder, show a considerable increase in Charpy impact value compared with Comparative example 2, where PMMA is an impact resistance-grade product containing rubber. The pencil hardness, flexural strength and coefficient of linear expansion in Example 1 and Reference 8 are maintained at values similar to those of References 1 to 7.

Table 2 gives the results for measurements of chemical crack resistance and squeak noise during screw fastening that were conducted in Example 1 and Reference 8 and Comparative examples 1 and 2. Chemical crack resistance was tested as follows. As illustrated in Fig. 1, a molded article A for testing, 3 mm thick and 15 mm wide, was disposed on a jig 2 having a convex surface 1, the molded article A being bent along the convex surface 1. Both side ends of the molded article A for testing were fixed with fasteners 3. Various strains, of 0.15%, 0.3%, 0.45% and 0.6%, were applied to the surface of the molded article A for testing, by fixing thus the molded article A for testing, in a bent state, onto the convex surface 1 of the jig 2. To impart these four types of strain, there were used four types of jig 2, with the curvature of the convex surface 1 being set in such a manner that the top face of the molded article A for testing was stretched by 0.15 to 0.6%.

A barrel 4 having apertures at the top and the bottom, and having an inner diameter of 5 mm, was then fixed with silicone grease onto the middle portion of the top face of the molded article A for testing. The interior of the barrel 4 was filled with ethyl alcohol and the barrel 4 was left to stand for 24 hours. The critical strain values given in Table 2 denote the strain value upon occurrence of breakage or cracks in the molded article A for testing, at the portion in contact with the ethyl alcohol.

In the test for squeak noise during screw fastening there was observed whether or not a squeak noise was perceptible upon drilling a 3.4 mm-diameter hole on a molded article for testing, 3 mm thick, followed by driving of a T4 tapping screw into the hole.

As table 2 shows, no squeak noise during screw fastening was perceived in the molded articles of Example 1 and Reference 8.

Example 1, that uses the baked PTFE fine powder filler having a heating loss of at least 5% by weight, shows a greater critical strain value and greater chemical resistance than Reference 8, that uses the baked PTFE fine powder filler having a heating loss of 3% by weight.

## Claims

1. A methacrylic resin composition comprising:
a methacrylic resin; and
a fine powder filler of fluororesin blended in said methacrylic resin,
wherein said fluororesin is a tetrafluoroethylene resin (PTFE), and
wherein the fine powder filler is a baked PTFE having a reduction ratio of at least 5% by weight when heated at 420°C for 30 minutes.

2. The methacrylic resin composition according to claim 1,
wherein the average particle size of the fine powder filler ranges from 5 µm to 25 µm.

3. The methacrylic resin composition according to claim 1, wherein the compounding ratio of the fine powder filler ranges from 0.5 to 5 wt%.

4. A molded article made of the methacrylic resin composition according to any one of claims 1 to 3.

5. A method of producing a methacrylic resin composition comprising the steps of:
using a fine powder filler of fluororesin; and
blending a methacrylic resin with said fine powder filler;
wherein said fluororesin is a tetrafluoroethylene resin (PTFE), and
wherein the fine powder filler is a baked PTFE having a reduction ratio of at least 5% by weight when heated at 420°C for 30 minutes.

6. The method according to claim 5,
wherein the average particle size of the fine powder filler ranges from 5 µm to 25 µm.

7. The method according to claim 5, wherein the compounding ratio of the fine powder filler ranges from 0.5 to 5 wt%.

## Patentansprüche

1. Methacrylatharzverbindung mit:
einem Methacrylatharz; und
einer Feinpulververfüllung mit einem Fluorkunststoff, die mit dem Methacrylatharz gemischt ist,
wobei der Fluorkunststoff ein Tetraflourethylenkunststoff (PTFE) ist, und wobei die Feinpulververfüllung ein wärmebehandelter PTFE ist, welcher ein Reduktionsverhältnis von zumindest 5 Gewichtsprozent hat, wenn es für 30 Minuten auf eine Temperatur von 420 °C erhitzt wird.

2. Methacrylatharzverbindung nach Anspruch 1, wobei die durchschnittliche Teilchengröße der Feinpulververfüllung in einem Bereich zwischen von 5 µm und 25 µm liegt.

3. Methacrylatharzverbindung nach Anspruch 1, wobei das Mischungsverhältnis der Feinpulververfüllung in einem Bereich zwischen 0,5 bis 5 Gewichtsprozent liegt.

4. Ein Formkörper aus der Methacrylatharzverbindung nach einem der Ansprüche 1 bis 3.

5. Ein Verfahren zum Herstellen einer Methacrylatharzverbindung mit folgenden Schritten:
Verwenden einer Feinpulververfüllung aus Fluorkunststoff; und
Mischen eines Methacrylatharzes mit der Feinpulververfüllung,
wobei der Fluorkunststoff ein Tetrafluoroethylenkunststoff (PTFE) ist, und
wobei die Feinpulververfüllung ein wärmebehandelter PTFE ist, welcher ein Re-duktionsverhältnis von zumindest 5 Gewichtsprozent hat, wenn es auf eine Temperatur von 420°C für 30 Minuten erhitzt wird.

6. Verfahren nach Anspruch 5, wobei die durchschnittliche Teilchengröße der Feinpulververfüllung im Bereich zwischen 5 µm und 25 µm liegt.

7. Verfahren nach Anspruch 5, wobei das Zusammensetzungsverhältnis der Feinpulververfüllung in einem Bereich von 0,5 bis 5 Gewichtsprozent liegt.

## Revendications

1. Composition de résine méthacrylique comprenant :
une résine méthacrylique ; et
une charge en poudre fine de résine fluorée mélangée dans ladite résine méthacrylique,
dans laquelle ladite résine fluorée est une résine de tétrafluoroéthylène (PTFE), et
dans laquelle la charge en poudre fine est un PTFE cuit ayant un taux de réduction d'au moins 5 % en poids quand il est chauffé à 420°C pendant 30 minutes.

2. Composition de résine méthacrylique selon la revendication 1, dans laquelle la granulométrie moyenne de la charge en poudre fine est située dans la plage allant de 5 µm à 25 µm.

3. Composition de résine méthacrylique selon la revendication 1, dans laquelle la proportion de mélange de la charge en poudre fine est située dans la plage allant de 0,5 à 5 % en poids.

4. Article moulé fait de la composition de résine méthacrylique selon l'une quelconque des revendications 1 à 3.

5. Procédé pour produire une composition de résine méthacrylique, comprenant les étapes consistant à :
utiliser une charge en poudre fine de résine fluorée ; et
mélanger une résine méthacrylique avec ladite charge en poudre fine ;
dans lequel ladite résine fluorée est une résine de tétrafluoroéthylène (PTFE), et
dans lequel la charge en poudre fine est un PTFE cuit ayant un taux de réduction d'au moins 5 % en poids quand il est chauffé à 420°C pendant 30 minutes.

6. Procédé selon la revendication 5, dans lequel la granulométrie moyenne de la charge en poudre fine est située dans la plage allant de 5 µm à 25 µm.

7. Procédé selon la revendication 5, dans lequel la proportion de mélange de la charge en poudre fine est située dans la plage allant de 0,5 à 5 % en poids.
